# EUROPEAN PATENT SPECIFICATION

(11) **EP 3 193 683 B1**
(45) Date of publication and mention of the grant of the patent: **14.08.2019**
(21) Application number: 15763937.8
(22) Date of filing: 18.09.2015
(51) Int. Cl.: A47J 36/32

(54) **INDUCTION COOKING PAN WITH TEMPERATURE MEASUREMENT**
INDUKTIONSBRATPFANNE MIT TEMPERATURMESSUNG
CASSEROLE DE CUISSON PAR INDUCTION COMPRENANT MESURE DE TEMPÉRATURE

(30) Priority: 19.09.2014 NL 2013503
(43) Date of publication of application: 26.07.2017
(73) Proprietor: Intell Properties B.V., 6921 RZ Duiven (NL)
(72) Inventor: VAN HAASTER, Sjoerd Michiel, 6661 LE Elst (NL); HOEFSMIT, Marcel, 6921 RZ Duiven (NL)
(74) Representative: Nederlandsch Octrooibureau
(86) International application number: PCT/EP2015/071426
(87) International publication number: WO 2016/042123

(56) References cited:
- WO-A1-2013/098016
- WO-A1-2013/103939
- US-A- 3 742 179
- US-A1- 2012 132 646

## Description

### Field of the invention

The present invention relates to induction cookware, in particular an induction cooking pan provided with temperature measurement. In a further aspect, the presenting invention relates to an induction cooking assembly.

### Prior art

International publication WO 2012/159865 discloses a temperature information system comprising a cooking pot and a cooking hob, wherein the cooking pot comprises at least one temperature sensor and at least one sensor antenna electrically connected to the sensor, and wherein the cooking hob comprises at least one reader and at least one reader antenna electrically connected to the reader. The at least one sensor is wirelessly connected to the reader via the sensor antenna and the reader antenna a document disclosing the features of the preamble of claim 1 is known from US2012/132646.

### Summary of the invention

The present invention seeks to provide improved induction cooking ware, in particular an induction cooking pan with temperature measurement, wherein the induction cooking pan is configured for wireless power transfer and may further be arranged for wireless data communication for optimizing food preparation.

According to the present invention an induction cooking pan of the type defined in the preamble is provided, wherein the induction cooking pan comprises, a base member and an upwardly oriented wall member circumferentially connected thereto, the induction cooking pan further comprising a measurement system connected to a power receiving unit and at least one sensor, the power receiving unit being electrically connected to an inductive transceiver element for receiving supply power, wherein the inductive transceiver element is located in the base member. This allows to provide electronic elements, sensors and the like which might be provided in the cooking pan to be supplied with operating power, without any further external and possible interfering elements.

In an embodiment, the inductive transceiver element may be further arranged to transmit data received from the measurement system, wherein the data received may be transmitted as wireless magnetically encoded data. This embodiment makes optimal use of the inductive transceiver element as it is not only arranged to heat the inductive heating pan, but it also utilizes the same inductive transceiver element to transmit data. In further embodiments the inductive transceiver element may be further arranged to receive external data in the form of wireless magnetically encoded data through inductive coupling.

According to the invention, the at least one sensor comprises a temperature sensor and a weight sensor to e.g. enable accurate and timely monitoring of temperatures and/or weights of food being prepared.

In a further embodiment the at least one sensor comprises at least two temperature sensors positioned in the induction cooking pan having a predetermined separation distance. Because of the separation or spatial distance between the temperature sensors, this embodiment allows for monitoring of heterogeneous temperature distribution of food in the induction cooking pan. Such a heterogeneous temperature distribution often happens when users do not properly stir food that is being heated. To avoid burning of food near or at the base member ("the bottom"), in an embodiment the at least one sensor is a temperature sensor disposed at a joint section provided between the base member and wall member. Having a temperature sensor disposed near or at the joint section allows for accurate measurement of the food temperature near or at the bottom of the induction cooking pan.

In a more specific embodiment, the wall member comprises an inner wall, an outer wall and an internal cavity disposed there between, wherein the at least one sensor is disposed in the internal cavity for facilitating accurate measurement of cooking parameter (e.g. temperatures, weights) with a minimum of external measurement disturbances, such as electromagnetic interference, noise etc. In this embodiment the at least one sensor is enclosed by the inner and outer wall, thereby optimizing the use of available space within the induction cooking pan for protection as well as improved aesthetics. The power receiving unit and measurement system may be disposed in the internal cavity as well.

Many embodiments of the induction cooking pan of the present invention comprise an inner cavity interposed between an inner and outer wall of the wall member. However, other designs of the wall member need not comprise such an inner cavity and the wall member may comprise a single, substantially solid wall instead. This embodiment of the wall member may not be suitable for accommodating various electronic components such as the at least one sensor, the power receiving unit, the measurement system, and/or various electrical wires and the like. However, the electronic components may alternatively be disposed along or affixed to an outer surface of the wall member, wherein one or more handle members of the induction cooking pan may be arranged for covering the electronic components. The one or more handle members are typically arranged to holding, lifting and moving the induction cooking pan by a user.

In an embodiment, the power receiving unit and measurement system may thus be disposed at least in part in, or behind, one or more handle members of the induction cooking pan. Furthermore, to accommodate electrical wires connected to the power receiving unit, the measurement system and the inductive transceiver element, each of the one or more handle members may comprise an extension part disposed along the wall member for covering the electrical wires. In particular, an extension part of a handle member may be viewed as an elongated cover mounted to an outer surface of the wall member, wherein the elongated cover typically covers a part of the outer surface of the wall member from e.g. a handle member to the base member of the induction cooking pan. The elongated cover may typically be designed to improve aesthetics of the induction cooking pan.

In an embodiment, the inductive transceiver element is positioned circumferentially around an induction heating part of the base member, thereby avoiding interference with the induction heating part when the induction cooking pan is in operation and in use.

According to the invention, the induction cooking pan may further comprise a notification system electrically connected to the measurement system, wherein the notification system is configured for notifying messages in response to data measured by the at least one sensor. The notification system provides "intelligence" to the induction cooking pan and is able to alert and notify a user whenever data measured requires notification of a special event. For example, notification may be desired or even necessary when food starts to boil, or when a boil over event occurs, or when the induction cooking pan tends to boil dry etc.

In a further aspect of the present invention, an induction cooking assembly for inductive cooking is provided, comprising an induction cooking hob and an induction cooking pan according to any one of the present invention embodiments, wherein the induction cooking hob comprises a power supplying unit electrically connected to a transceiver coil element disposed underneath a support surface of the induction cooking hob, the transceiver coil element being in electromagnetic engagement with the induction cooking pan for heating thereof and supplying electrical supply power to the measurement system. Using such an induction cooking assembly, further functionality can be provided to users which improves the usability and ease of use of induction cooking. Indeed, this embodiment allows for wireless power transfer to various electronics such as the measurement system and the at least one sensor of the induction cooking pan through the transceiver coil element, which is in electromagnetic engagement with the inductive transceiver element of the induction cooking pan while cooking. In an embodiment, the induction cooking hob may further comprise a control system connected to the transceiver coil element for receiving measurement data through the inductive transceiver element of the induction cooking pan. This embodiment is particularly advantageous for wireless transfer of measured data from the induction cooking pan to the induction cooking hob for further processing, such a providing notification messages. To that end, in an embodiment, the cooking hob may further comprise a notification system connected to the control system for notifying messages in response to measured data from the at least one sensor, thereby providing intelligence and support to the user during food preparation. The notification messages may cover a host of events during the food preparation process, wherein the notification system may further comprises one or more audio and/or visual notification devices to convey such notification messages to the user.

### Short description of drawings

The present invention will be discussed in more detail hereinafter based on a number of exemplary embodiments with reference to the drawings, in which
Figure 1 shows a cross sectional view of an embodiment of an induction cooker according to the present invention;
Figure 2 shows an exploded view of an embodiment of an induction cooking pan according to the present invention; and
Figure 3 shows a cross sectional view of an embodiment of a induction cooking assembly according to according to the present invention.

### Detailed description of exemplary embodiments

It is often said that cooking requires multitasking, wherein tasks such as cutting, stirring and baking are done simultaneously and wherein interaction is required with what one sees, tastes and hears while cooking. However, managing these various tasks properly and getting the timing right when preparing a meal typically requires considerable experience and intuition.

For some inexperienced users, preparing a meal may become dangerous when cooking and boiling times are not respected. For example, food temperatures in a pan are not readily observable with the naked eye, and unequal or heterogeneous heating of food may go unnoticed causing locally overheating of food near or at a hot base of the pan. In more dangerous situations it may even be possible that a user is not paying attention at all and causes a boil dry situation, wherein all fluids are boiled off and food starts to burn and catch fire.

In view of the above there is a need for an improved cooking experience such as enabling accurate and timely estimation of e.g. temperatures and/or weights of food and fluids in a pan to avoid overheating, over boiling, burning and the like.

According to the present invention an induction cooking pan is provided fulfilling this need, as well as an induction cooking hub cooperatively arranged with the induction cooking pan.

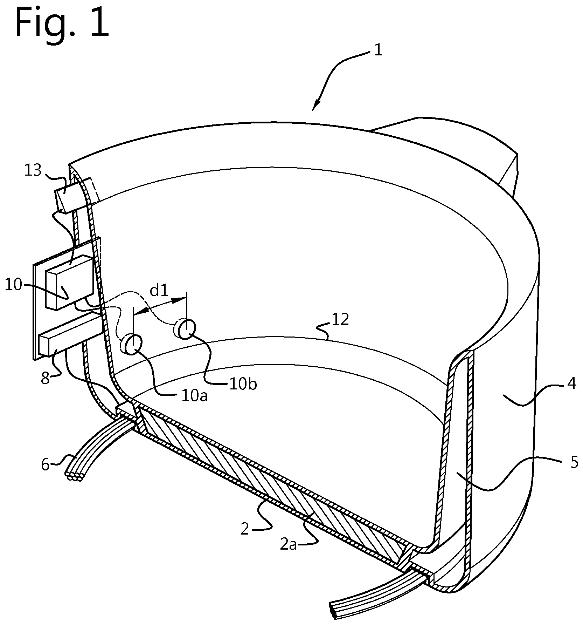

Figure 1 depicts a cross-sectional view of an embodiment of an induction cooking pan according to the present invention. In this embodiment, the induction cooking pan comprises a base member 2 and an upwardly oriented wall member 4 circumferentially connected thereto. The base member 2 typically comprises an electrically conducting material 2a (or induction heating part) having a sufficient level of electrical resistivity to allow for induction heating through the formation of eddy currents in response to a varying electromagnetic field extending through the base member 2. In typical embodiments the base member 2 (or better induction heating part 2a) comprises ferromagnetic material, such as stainless steel and iron.

The induction cooking pan 1 of the present invention further comprises a measurement system 10 connected to a power receiving unit 8 and at least one sensor 10a, 10b, 13. The measurement system 10 is typically configured for enabling continuous monitoring of information and data received by the at least one sensor 10a, 10b, 13. In some embodiments the measurement system 10 may comprise programmable logic and be disposed on a printed circuit board at some convenient location in the induction cooking pan 1.

Further, the power receiving unit 8 is electrically connected, e.g. through electrical wiring 8a, to an inductive transceiver element 6 for receiving supply power, wherein the inductive transceiver element 6 is located in the base member 2.

According to the present invention, the induction cooking pan 1 does not require an internal or wired power source for supplying power to various electronic components of the induction cooking pan 1, such as the measurement system 10 and the at least one sensor 10a, 10b, 13. The inductive transceiver element 6 disposed in the base member 2 is advantageously configured for being magnetically excited by a varying, alternating or oscillating electromagnetic field extending there through while cooking.

The present invention has the advantage that inductive heating as well as supplying power to various electronics of the induction cooking pan 1 may be accomplished by the same electromagnetic field source, which causes inductive heating of the base member 2 as well as providing power to various electronics of the induction cooking pan 1 through the inductive transceiver element 6 and power receiving unit 8. Alternatively, inductive heating and power transfer to the induction cooking pan 1 may also be accomplished by separate external electromagnetic fields, wherein a first electromagnetic field is responsible for inductive heating and a second electromagnetic field interacts with the inductive transceiver element 6 for supplying power to various electronics of the induction cooking pan 1, such as the power receiving unit 8, measurement system 10, and the at least one sensor 10a, 10b, 13.

In the embodiment shown, the induction cooking pan 1 may further comprise an induction heating part 2a centrally disposed in the base member 2, wherein the heating part 2a is responsible for inductive heating of the pan 1 when electromagnetically exited while cooking. In many embodiments the induction heating part 2a is of ferromagnetic material. In particular, the induction heating part 2a may be of cast iron or stainless steel for optimal inductive heating.

In an embodiment, the inductive transceiver element 6 is positioned circumferentially around an induction heating part 2a of the base member 2. This avoids interference with the induction heating part 2a when the induction cooking pan 1 is in operation. The inductive transceiver element 6 may be enclosed by a sleeve member, to further avoid interference and possibly overheating the inductive transceiver element 6.

According to the invention, in addition to inductive heating of the base member 2 (e.g. the inductive heating part 2a) and power supply through inductive interaction with the inductive transceiver element 6, the inductive transceiver element 6 may be further arranged to transmit data received from the measurement system 10. That is, the inductive transceiver element 6 may be arranged for transmitting magnetically encoded data with the inductive transceiver element 6.

In view of the invention it is also conceivable that the induction cooking pan 1 may in fact comprise a secondary inductive transceiver element configured for transferring power or data only. That is, in view of the present invention it is not necessary that both power transfer and data transfer are accomplished by a single inductive transceiver element 6. So in an alternative embodiment a secondary inductive transceiver element may be provided configured for data transfer or power transfer only. In particular, there is an embodiment wherein the inductive transceiver element 6 may be responsible for data transfer only and a secondary inductive transceiver element is provided solely configured for power transfer (or vice versa).

According to the invention, based on particular readings of the at least one sensor 10a, 10b, 13, the measurement system 10 may encode a notification signal representing e.g. a warning or alert, and electromagnetically send/transfer this notification signal through the inductive transceiver element 6 to e.g. some external receiver and notification system. This functionality greatly improves the cooking experience as data received by the at least one sensor 10a, 10b, 13 may be interpreted by the measurement system 10, wherein an appropriate notification message or signal may be wirelessly transferred to the user. As a result, the induction cooking pan 1 of the present invention alleviates the user from monitoring important cooking parameters as measured by the at least on sensor 10a, 10b, 13, thereby providing support to the food preparation process for successful completion thereof. Examples of important cooking parameter are e.g. temperatures and/or weights of food in the induction cooking pan 1.

As temperature and/or weights of food in the induction cooking pan 1 are not readily observable by a user, timely tracking and monitoring these parameters is often desired in order to follow a required preparation process for food and ingredients to be prepared. To that end, in an advantageous embodiment the at least one sensor comprises a temperature sensor 10a, 10b and/or a weight sensor 13. The temperature sensor 10a, 10b and/or weight sensor 13 enable accurate and timely monitoring of temperatures and/or weights of food in the induction cooking pan 1 while cooking, so that a desired timing schedule associated with the food preparation process can be respected for optimal results.

As shown in Figure 1, in an embodiment the at least one sensor 10a, 10b, 13 may comprises at least two temperature sensors 10a, 10b positioned in the cooking pan 1 having a predetermined separation distance *d1.* This embodiment is advantageous in view of possible heterogeneous temperature distribution of food in the induction cooking pan 1. For example, a common food preparation step is heating up or keeping food at a particular temperature. In order to avoid unequal heating of food, and possibly local burning of food in the induction cooking pan 1, the at least two temperature sensors 10a, 10b provide temperature readings to the measurement system 10 for two different locations in the induction cooking pan 1, where the at least two temperature sensors are separated over a predetermined separation distance *d1.* This embodiment then readily allows heterogeneous heating to be measured when (substantial) unequal temperatures are measured over the separation distance *d1* by the at least two temperature sensors 10a, 10b.

In the embodiment shown, the at least two temperature sensors 10a, 10b may be positioned at substantially equal heights as measured from the base member 2 over a separation distance *d1.* This embodiment thus allows detection of horizontal heterogeneous or uneven heating. Alternatively, the at least two temperature sensors 10a, 10b may be positioned at substantially unequal heights as measured from the base member 2, which allows for detection of vertical heterogeneous or uneven heating.

From a practical point of view, for example, a common food preparation step often comprises heating up some ingredient in the induction cooking pan 1 while other food preparation steps need to be carried out. While heating the ingredient the user may not pay attention and may not be aware that e.g. stirring is needed for an even and homogenous heating of the ingredient. The at least two temperature sensors 10a, 10b now enable a timely and accurate detection of uneven or heterogeneous heating and possible local burning of the ingredient, wherein said sensors 10a, 10b supply temperature readings to the measurement system 10 while cooking.

In the embodiment depicted in Figure 1, the at least one sensor 10a, 10b is configured for measuring a temperature close to the base member 2 for timely and accurate measurement directly above said base member 2. Having the temperature sensor 10a, 10b disposed close to the base member 2 allows the detection of boil over and boil dry scenarios. For example, a sudden increase in temperature of the base member 2 is indicative of reduced heat transfer to an ingredient in the induction cooking pan 1. When a fluid in the induction cooking pan 1 boils dry, inductive heat generated in the base member 2, in particular the inductive heating part 2a , stops from being transferred to the fluid, causing a rapid temperature increase of the base member 2. Such an increase in temperature is readily measurable by the at least one temperature sensor 10a, 10b.

In a further embodiment, the at least one sensor 10a, 10b, 13 may also comprise a weight sensor 13 located at or near an upper rim 14 of the induction cooking pan 1, which allows to measure weight by detecting a difference between when the induction cooking pan 1 is lifted at the rim (e.g. its handle parts) and when it is put down on a surface. Such a weight sensor 13 would also allow to detect the absence of a lid on the induction cooking pan 1.

According to the invention, the wall member 4 may comprise an inner wall 4a, an outer wall 4b and an internal cavity 5 disposed there between, wherein the at least one sensor 10a, 10b, 13 is disposed in the internal cavity 5. In this embodiment the at least one sensor 10a, 10b, 13 is disposed in a cavity wall of the induction cooking pan 1 for facilitating accurate measurement of cooking parameter (e.g. temperatures, weights) with a minimum of external measurement disturbances, such as electromagnetic interference, noise and the like.

In a particular embodiment, the wall member 4 may comprises an inner wall 4a, an outer wall 4b and an internal cavity 5 disposed there between, wherein the at least one sensor 10a, 10b, 13 comprises at least one temperature sensor 10a, 10b disposed in the internal cavity 5. In this embodiment, the at least one temperature sensor 10a, 10b may be affixed to the inner wall 4a for accurate measurement of food temperatures in the induction cooking pan 1. The internal wall 4a will generally exhibit a very small temperature gradient over its wall thickness from a first outer surface to a second outer surface. Temperatures measured by the at least one temperature sensor 10a, 10b, in the internal cavity 5 will thus closely approximate the actual or "real" temperature of the food being prepared.

In an embodiment, the inner wall 4a and outer wall 4b may be of different material than the base member 2, in particular the inductive heating part 2a. The inner wall 4a and outer wall 4b may be of aluminium, for example, which would minimize the weight of the induction cooking pan 1 and improve heat transfer.

In a further embodiment, the power receiving unit 8 and measurement system 10 may be disposed in the internal cavity 5. This embodiment allows for a compact design and protects and shields various electronics of the induction cooking pan 1 from external disturbances. Typically, a printed circuit board (PCB) may be provided with various electronics mounted thereon, such as the power receiving unit 8 and measurement system 10, wherein the printed circuit board is disposed in the internal cavity 5. In this way the entire PCB is thus protected from external disturbances. For an improved cooking experience it is desirable to allow notifications to be issued to a user in response to measurements taken by the at least one sensor 10a, 10b, 13. To that end, in an embodiment the induction cooking pan 1 may comprise a local notification system electrically connected to the measurement system 10, wherein the local notification system is configured for notifying messages in response to data measured by the at least one sensor 10a, 10b, 13. This embodiment may be envisaged as an "intelligent" induction cooking pan 1 having a measurement system 10 and a local notification system connected thereto. The local notification system may comprise auditory and/or visual devices, such as a loudspeaker and/or a visual display or indicators. These devices may provide messages to a user corresponding to measurements taken by the at least one sensor 10a, 10b, 13 and interpreted by the measurement system 10 during cooking. As such, the user is able to take necessary actions based on message content received from the notification system indicating that, for example, heterogeneous heating, boil over or boil dry is taking place. Necessary actions based on measurements taken by the at least one sensor 10a, 10b, 13 may comprise e.g. lowering or increasing temperature settings, stirring of food, placing or taking a lid on or off the induction cooking pan 1, draining fluids and/or adding fluids etc.

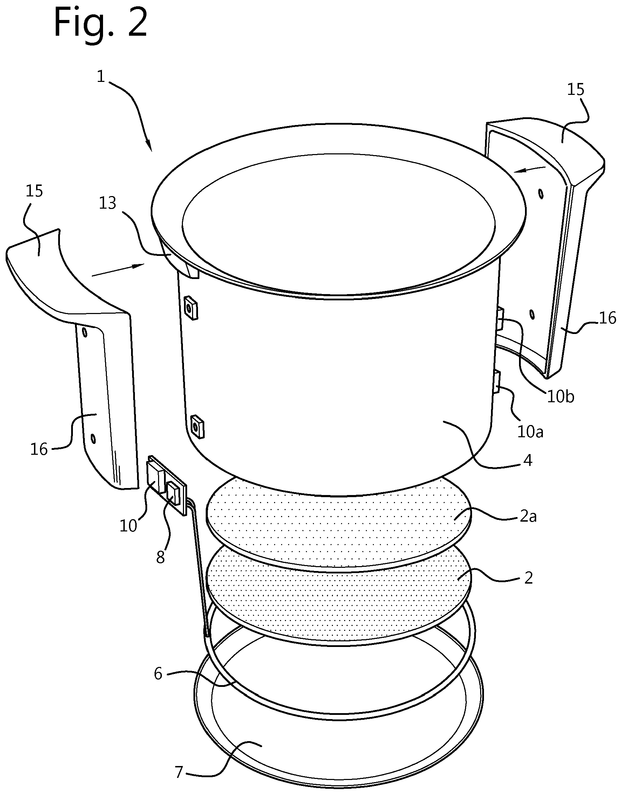

Figure 2 depicts an exploded view of an embodiment of the induction cooking pan 1 of the present invention. In the embodiment shown, the induction cooking pan 1 comprises one or more handle members 15 for holding, lifting and moving the induction cooking pan 1. The one or more handle members 15 are typically made of heat resistant material to protect users from skin burns for example. According to the invention , the handle parts 15 may be arranged for covering the at least one sensor 10a, 10b, 13, the power receiving unit 8, and/or the measurement system 10, and electrical wiring and the like, wherein the at least one sensor 10a, 10b, 13 may be affixed to the wall member 4, such as an outer surface thereof. Typically, the power receiving unit 8 and measurement system 10 are disposed at least in part in or behind the one or more handle members 15 of the induction cooking pan 1 . In convenient embodiments the power receiving unit 8 and measurement system 10 are provided on a printed circuit board (PCB), which is disposed at least in part in or behind the one of the one or more handle members 15 or between the one or more handle members 15 and wall member 4.

Further, in the embodiment shown the inductive transceiver element 6 is positioned circumferentially around the induction heating part 2a of the base member 2, and a base cover 7 may provided for enclosing and protecting the inductive transceiver element 6.

The one or more handle members 15 may each comprise an extension part 16 for accommodating the at least one sensor 10a, 10b, 13, the power receiving unit 8 and/or the measurement system 10, as well as electrical wiring, thereby providing protection to these various components as well as improved aesthetics. The extension part 16 may also be advantageous for covering electrical wiring connected to the power receiving unit 8, the measurement system 10 and the inductive coil transceiver element 6. For example, a PCB provided with the power receiving unit 8 and measurement system 10 may be disposed in the one or more handle members 15, wherein electrical wiring connected thereto and the inductive transceiver element 6 may be routed through or behind such a handle extension part 16.

Note that even though the embodiment in Figure 2 shows a single upwardly oriented wall member 4, it may be the case that in particular embodiments the wall member 4 does comprise an inner wall 4a and an outer wall 4b as shown in Figure 1, but wherein the internal cavity 5 is simply too thin or too small to accommodate various electronic components. This may be the case for embodiments wherein a liner wall or layer acts as an inner wall 4a. Such a separate liner wall or layer may leave no discernible internal cavity for accommodating electronic components, wiring etc. The liner wall or layer may provide improved surface properties for cooking, such as special smoothness for prevention food adhesion but also improved resistance to burning and scratching.

The embodiments just described may be particularly advantageous in case the wall member 4 comprises an internal cavity 5 which is too small, comprises an incompatible geometry to house the necessary electrical components , or wherein any sort of internal cavity is lacking for accommodating the at least one sensor 10a,10b,13, power receiving unit, measurement system 10 and/or electrical wiring. These embodiments thus allow various electronic components to be disposed inside and/or behind the one or more handle parts 15 and/or the extension parts 16 for protection thereof and improved aesthetics. In addition to an "intelligent" induction cooking pan 1 comprising a notification system for notifying a user on measured cooking parameter by the at least one sensor 10a, 10b, 13, the induction cooking pan 1 of the present invention is advantageous when used in combination with an "intelligent" induction cooking hob or cooking top configured for electromagnetic engagement with the induction cooking pan 1 through the inductive transceiver element 6.

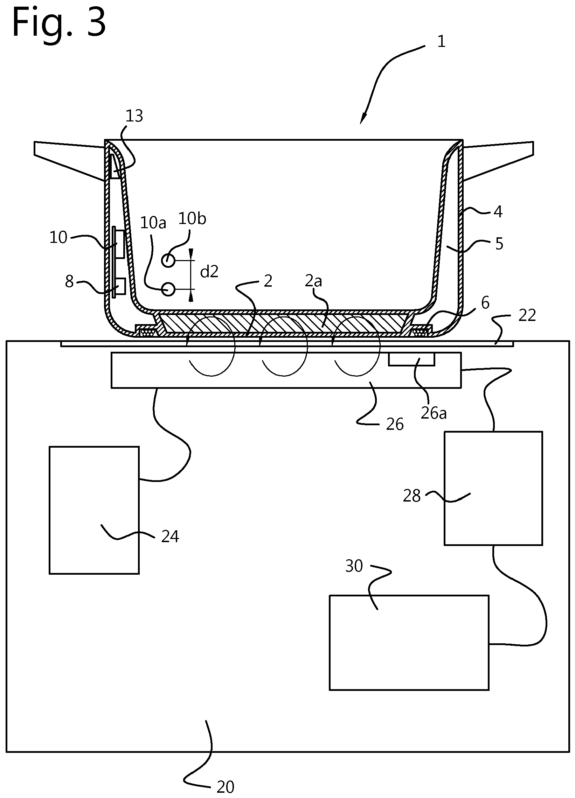

Figure 3 shows a cross sectional view of an embodiment of a induction cooking assembly according to the present invention. In the embodiment shown, the induction cooking assembly comprises an induction cooking hob 20 and the induction cooking pan 1 as disclosed above. The induction cooking hob 20 comprises a power supplying unit 24 electrically connected to a transceiver coil element 26 disposed underneath a support surface 22 of the induction cooking hob 20, wherein the transceiver coil element 26 is in electromagnetic engagement with the induction cooking pan 1 for heating thereof and supplying electrical supply power to the measurement system 10. This embodiment allows for wireless power transfer to various electronics (e.g. the measurement system 10, the at least one sensor 10a, 10b, 13) of the induction cooking pan 1 through the transceiver coil element 26, which is in electromagnetic engagement with the inductive transceiver element 6 of the induction cooking pan 1 during cooking. In this arrangement the power receiving unit 8 converts received power from the inductive transceiver element 6 toward electricity for the measurement system 10 and the at least on sensor 10a, 10b, 13.

In the embodiment shown, the at least one sensor 10a, 10b, 13 may comprise two temperature sensors 10a, 10b separated over a separation distance *d2.* In particular, the sensors 10a, 10b shown are now located at different height with respect to the base member 2. This allows for detection of e.g. heterogeneous heating in a vertical direction, i.e. an upper part of food in the induction pan 1 may have a lower temperature than a lower part of the food. Of course, the at least one sensor 10a, 10b, 13 of the induction cooking pan 1 of the present invention may even comprise three temperature sensors, wherein two temperature sensors are positioned at substantially equal heights from the base member 2 and one temperature sensor is located at a higher position than the two temperature sensors from the base member 2. Such an arrangement allows for detection of heterogeneous heating of food in both a horizontal and vertical direction.

In an embodiment, the induction cooking hob 20 may further comprise a control system 28 connected to the transceiver coil element 26 for receiving measurement data through the inductive transceiver element 6 of the induction cooking pan 1. In this embodiment, measurements obtained from the at least one sensor 10a, 10b, 13 by the measurement system 10 may be wirelessly transferred to the transceiver coil element 26 of the induction cooking hob 20.

In a further embodiment, the induction cooking hob 20 may comprise one or more additional sensors, e.g. a temperature sensor, positioned in or just below the support surface 22 and connected to the control system 28. In case the additional sensor is a temperature sensor, it may be positioned close to the transceiver coil element 26 to provide accurate temperature data. The control system 28 may be arranged to us the data received from the additional sensors in addition to the data obtained from the at least one sensor 10a, 10b, 13 in the cooking pan 1.

For an improved cooking experience by timely and accurately notifying users of various cooking parameters, such as temperatures and/or weights, the induction cooking hob 20 may further comprise a notification system 30 connected to the control system 28 for notifying messages in response to measured data from the at least one sensor 10a, 10b, 13.

In this embodiment the cooking hob 20 may be viewed as an "intelligent" cooking hob 20 as it may receive wirelessly transferred data from the induction cooking pan 1 and notify users accordingly. For example, the induction cooking hob 20, the control unit 28 in particular, may comprise sets of values for various cooking parameters, wherein these sets of values are associated with particular notification messages. In advanced embodiments it is conceivable that the induction cooking hob 20 may even be programmable by a user, such as manually supplying measureable cooking parameter (e.g. temperatures, weights, boiling times etc.) as well as associated notification messages to the induction cooking hob 20. For example, the "intelligent" cooking hob 20 and induction cooking pan 1 of the present invention allow for energy savings up to 30% by facilitating automatic continuous boiling (e.g. "gentle" or "soft" boiling) but also for automatic continuous simmering just below the boiling temperature. Moreover, the user need not monitor the boiling or simmering process and manual intervention to maintain a state of gentle boiling or simmering is not needed.

In many embodiments the notification system 30 may comprise one or more audio and/or visual notification devices, such as loudspeakers and/or visual displays to convey notification messages to a user for assisting the food preparation process and timing thereof. The notification messages are of course adapted to measurements taken by the at least one sensor 10a, 10b, 13 to provide optimal support to the food preparation process. In the embodiment shown in Figure 3, it is seen that the induction cooking hob 20 may further comprise a secondary transceiver coil element 26a. The secondary transceiver coil element 26a may be adapted for data transfer or power supply only. That is, in view of the invention the induction cooking pan 1 comprises an inductive transceiver element 6 suitable for receiving power and transferring data. In some embodiments, however, the induction cooking pan 1 may also be provided with a secondary inductive transceiver element for data or power transfer only. These embodiments of the induction cooking pan 1 allow for a separation of data transfer via e.g. the inductive transceiver element 6 and power transfer via the secondary inductive transceiver element (or vice versa). The induction cooking hob 20 may therefore be configured in a likewise fashion, wherein the secondary transceiver coil element 26a is configured for data or power transfer only.

In an even further embodiment the induction cooking hob 20 may even comprise three transceiver coil elements, i.e. a first transceiver coil element for inductive heating, a second transceiver coil element for power transfer and a third transceiver coil element for data transfer. The same reasoning applies to the induction cooking pan1, which may comprise two inductive transceiver elements, i.e. a first inductive transceiver element for power transfer and a second inductive transceiver element for data transfer.

From the above is unambiguously clear that power supply (transfer) and data transfer may be accomplished by a single transceiver coil element 26 and a single inductive transceiver element 6. Depending on the application, however, a plurality of transceiver coil elements in the induction cooking hob 20 and a plurality of inductive transceiver elements in the induction cooking pan 1 may be provided to physically separate and implement these functionalities.

The present invention embodiments have been described above with reference to a number of exemplary embodiments as shown in and described with reference to the drawings. Modifications and alternative implementations of some parts or elements are possible, and are included in the scope of protection as defined in the appended claims.

## Claims

1. Induction cooking pan for induction cooking, comprising a base member (2) and an upwardly oriented wall member (4) circumferentially connected thereto, the induction cooking pan (1) further comprising
a measurement system (10) connected to a power receiving unit (8) and at least one sensor (10a, 10b, 13), the power receiving unit (8) being electrically connected to an inductive transceiver element (6) for receiving supply power,
wherein the inductive transceiver element (6) is located in the base member (2), **characterised in that** the at least one sensor comprises a temperature sensor (10a, 10b) and a weight sensor (13).

2. Induction cooking pan according to claim 1, wherein the inductive transceiver element (6) is further arranged to transmit data received from the measurement system (10).

3. Induction cooking pan according to claim 1 or 2, wherein the at least one sensor comprises at least two temperature sensors (10a, 10b) positioned in the cooking pan (1) having a predetermined separation distance (d).

4. Induction cooking pan according to any one of claims 1-3, wherein the at least one sensor (10a, 10b) is a temperature sensor disposed at a joint section (12) provided between the base member (2) and wall member (4).

5. Induction cooking pan according to any one of claims 1-4, wherein the wall member (4) comprises an inner wall (4a), an outer wall (4b) and an internal cavity (5) disposed there between, the at least one sensor (10a, 10b, 13) being disposed in the internal cavity (5).

6. Induction cooking pan according to claim 5, wherein the power receiving unit (8) and measurement system (10) are disposed in the internal cavity (5).

7. Induction cooking pan according to any one of claims 1-6, wherein the power receiving unit (8) and measurement system (10) are disposed at least in part in, or behind, one or more handle members (15) of the induction cooking pan (1).

8. Induction cooking pan according to any one of claims 1-7, wherein the inductive transceiver element (6) is positioned circumferentially around an induction heating part (2a) of the base member (2).

9. Induction cooking pan according to anyone of claims 1-8, wherein the inductive transceiver element (6) is enclosed by a sleeve member.

10. Induction cooking pan according to any one of claims 1-9, further comprising a notification system electrically connected to the measurement system (10), the notification system being configured for notifying messages in response to data measured by the at least one sensor (10a, 10b, 13).

11. Induction cooking assembly for inductive cooking, comprising an induction cooking hob (20) and an induction cooking pan (1) according to any one of claims 1-10, wherein the induction cooking hob (20) comprises
a power supplying unit (24) electrically connected to a transceiver coil element (26) disposed underneath a support surface (22) of the induction cooking hob (20), the transceiver coil element (26) being in electromagnetic engagement with the induction cooking pan (1) for heating thereof and supplying electrical supply power to the measurement system (10).

12. Induction cooking assembly according to claim 11, wherein the induction cooking hob (20) further comprises a control system (28) connected to the transceiver coil element (26) for receiving measurement data through the inductive transceiver element (6) of the induction cooking pan (1).

13. Induction cooking assembly according to claim 12, wherein the cooking hob (20) further comprises a notification system (30) connected to the control system (28) for notifying messages in response to measured data from the at least one sensor (10a, 10b).

14. Induction cooking assembly according to claim 13, where the notification system (30) comprises one or more audio and/or visual notification devices.

## Patentansprüche

1. Induktionskochpfanne zum Induktionskochen, die ein Bodenelement (2) und ein damit umlaufend verbundenes, nach oben gerichtetes Wandelement (4) aufweist, wobei die Induktionskochpfanne (1) weiter aufweist:
ein Messsystem (10), das mit einer Energieaufnahmeeinheit (8) und wenigstens einem Sensor (10a, 10b, 13) verbunden ist, wobei die Energieaufnahmeeinheit (8) mit einem induktiven Transceiver (6) elektrisch verbunden ist, um zugeführte Energie zu empfangen,
wobei der induktive Transceiver (6) sich in dem Bodenelement (2) befindet, **dadurch gekennzeichnet, dass** der wenigstens eine Sensor einen Temperatursensor (10a, 10b) und einen Gewichtssensor (13) umfasst.

2. Induktionskochpfanne nach Anspruch 1, wobei der induktive Transceiver ferner dazu eingerichtet ist, um von dem Messsystem (10) aufgenommene Daten zu übertragen.

3. Induktionskochpfanne nach Anspruch 1 oder 2, wobei der wenigstens eine Sensor wenigstens zwei Temperatursensoren (10a, 10b) umfasst, die in der Kochpfanne (1) mit einem vorgegebenen Separationsabstand (d) vorgesehen sind.

4. Induktionskochpfanne nach einem der Ansprüche 1 - 3, wobei der wenigstens eine Sensor (10a, 10b) ein Temperatursensor ist, der an einem zwischen dem Bodenelement (2) und dem Wandelement (4) vorhandenen Verbindungsbereich (12) angeordnet ist.

5. Induktionskochpfanne nach einem der Ansprüche 1 - 4, wobei das Wandelement (4) eine innere Wand (4a), eine äußere Wand (4b) und einen dazwischen liegenden inneren Hohlraum (5) umfasst, wobei der wenigstens eine Sensor (10a, 10b, 13) in dem inneren Hohlraum (5) angeordnet ist.

6. Induktionskochpfanne nach Anspruch 5, wobei die Energieaufnahmeeinheit (8) und das Messsystem (10) in dem inneren Hohlraum (5) angeordnet sind.

7. Induktionskochpfanne nach einem der Ansprüche 1 - 6, wobei die Energieaufnahmeeinheit (8) und das Messsystem zumindest zum Teil in oder hinter einem oder mehreren Griffelementen (15) der Induktionskochpfanne (1) angeordnet sind.

8. Induktionskochpfanne nach einem der Ansprüche 1 - 7, wobei der induktive Transceiver (6) in Umfangsrichtung um eine Induktionsheizkomponente (2a) des Bodenelements (2) herum verlaufend positioniert ist.

9. Induktionskochpfanne nach einem der Ansprüche 1 - 8, wobei der induktive Transceiver (6) von einem Hülsenteil umschlossen ist.

10. Induktionskochpfanne nach einem der Ansprüche 1 - 9, die ferner ein Benachrichtigungssystem aufweist, das elektrisch mit dem Messsystem (10) verbunden ist, wobei das Benachrichtigungssystem dazu eingerichtet ist, um Meldungen in Reaktion auf von dem wenigstens einen Sensor (10a, 10b, 13) gemessene Daten mitzuteilen.

11. Induktionskochaufbau zum induktiven Kochen, mit einem Induktionskochfeld (20) und einer Induktionskochpfanne (1) nach einem der Ansprüche 1 - 10, wobei das Induktionskochfeld (20) aufweist
eine Energiezufuhreinheit (24), die elektrisch mit einem Transceiver-Spulenelement (26) verbunden ist, das unterhalb einer Stellfläche (22) des Induktionskochfeldes (20) angeordnet ist, wobei das Transceiver-Spulenelement (26) in elektromagnetischem Austausch mit der Induktionskochpfanne (1) steht, um diese zu erwärmen und dem Messsystem (10) elektrische Energie zuzuführen.

12. Induktionskochaufbau nach Anspruch 11, wobei das Induktionskochfeld (20) ferner ein Steuersystem (28) aufweist, das mit dem Transceiver-Spulenelement (26) verbunden ist, um von dem induktiven Transceiver (6) Messdaten der Induktionskochpfanne (1) zu empfangen.

13. Induktionskochaufbau nach Anspruch 12, wobei das Kochfeld (20) ein Benachrichtigungssystem (30) umfasst, das mit dem Steuersystem (28) verbunden ist, um Meldungen in Reaktion auf von dem wenigstens einen Sensor (10a, 10b) gemessene Daten mitzuteilen.

14. Induktionskochaufbau nach Anspruch 13, wobei das Benachrichtigungssystem (30) ein oder mehrere akustische und/oder visuelle Benachrichtigungseinrichtungen umfasst.

## Revendications

1. Récipient de cuisson par induction pour cuisson par induction, comprenant un élément de base (2) et un élément de paroi (4) orienté vers le haut relié de manière circonférentielle à l'élément de base, le récipient de cuisson par induction (1) comprenant en outre
- un système de mesure (10) connecté à une unité de réception d'énergie (8) et au moins un capteur (10a, 10b, 13), l'unité de réception d'énergie (8) étant connectée électriquement à un élément émetteur-récepteur inductif (6) pour recevoir la fourniture d'énergie,
- dans lequel l'élément émetteur-récepteur inductif (6) est situé dans l'élément de base (2), **caractérisé en ce que**
le au moins un capteur comprend un capteur de température (10a, 10b) et un capteur de poids (13).

2. Récipient de cuisson par induction selon la revendication 1, dans lequel l'élément émetteur-récepteur inductif (6) est en outre agencé pour transmettre des données reçues du système de mesure (10).

3. Récipient de cuisson par induction selon la revendication 1 ou 2, dans lequel le au moins un capteur comprend au moins deux capteurs de température (10a, 10b) positionnés dans le récipient de cuisson (1) et séparés l'un de l'autre par une distance prédéterminée (d).

4. Récipient de cuisson par induction selon l'une quelconque des revendications 1 à 3, dans lequel le au moins un capteur (10a, 10b) est un capteur de température disposé au niveau d'une section de jonction (12) prévue entre l'élément de base (2) et l'élément de paroi (4)

5. Récipient de cuisson par induction selon l'une quelconque des revendications 1 à 4, dans lequel l'élément de paroi (4) comprend une paroi interne (4a), une paroi externe (4b) et une cavité interne (5) formée entre celles-ci, le au moins un capteur (10a, 10b, 13) étant situé dans la cavité interne (5).

6. Récipient de cuisson par induction selon la revendication 5, dans lequel l'unité de réception d'énergie (8) et le système de mesure (10) sont disposés dans la cavité interne (5).

7. Récipient de cuisson par induction selon l'une quelconque des revendications 1 à 6, dans lequel l'unité de réception d'énergie (8) et le système de mesure (10) sont disposés au moins en partie dans ou derrière un ou plusieurs éléments de poignée (15) du récipient de cuisson par induction (1).

8. Récipient de cuisson par induction selon l'une quelconque des revendications 1 à 7, dans lequel l'élément émetteur-récepteur inductif (6) est positionné de manière circonférentielle autour d'une partie chauffante par induction (2a) de l'élément de base (2).

9. Récipient de cuisson par induction selon l'une quelconque des revendications 1 à 8, dans lequel l'élément émetteur-récepteur inductif (6) est entouré dans un élément formant manchon.

10. Récipient de cuisson par induction selon l'une quelconque des revendications 1 à 9, comprenant en outre un système de notification connecté électriquement au système de mesure (10), le système de notification étant configuré pour notifier des messages en réponse à des données mesurées par le au moins un capteur (10a, 10b, 13).

11. Ensemble de cuisson par induction pour cuisson par induction, comprenant une table de cuisson par induction (20) et un récipient de cuisson par induction (1) selon l'une quelconque des revendications 1 à 10, dans lequel la table de cuisson par induction (20) comprend une unité d'alimentation électrique (24) reliée à un élément de bobine émetteur-récepteur (26) disposé au-dessous d'une surface de support (22) de la table de cuisson par induction (20), l'élément de bobine émetteur-récepteur (26) étant en prise électromagnétique avec la plaque de cuisson par induction (1) pour la chauffer et pour fournir l'alimentation électrique du système de mesure (10).

12. Ensemble de cuisson par induction selon la revendication 11, dans lequel la table de cuisson par induction (20) comprend en outre un système de commande (28) connecté à l'élément de bobine émetteur-récepteur (26) pour recevoir des données de mesure par l'élément émetteur-récepteur inductif (6) du récipient de cuisson par induction (1).

13. Ensemble de cuisson par induction selon la revendication 12, dans lequel la table de cuisson (20) comprend en outre un système de notification (30) connecté au système de commande (28) pour notifier des messages en réponse à des données mesurées à partir du au moins un capteur (10a, 10b).

14. Ensemble de cuisson par induction selon la revendication 13, dans lequel le système de notification (30) comprend un ou plusieurs dispositifs de notification audio et/ou visuels.
